# EUROPÄISCHE PATENTSCHRIFT

(11) **EP 3 647 126 B1**
(45) Veröffentlichungstag und Bekanntmachung des Hinweises auf die Patenterteilung: **26.05.2021**
(21) Anmeldenummer: 19205056.5
(22) Anmeldetag: 24.10.2019
(51) Int. Cl.: B60R 21/239, B60R 21/2342, B60R 21/2338

(54) **GASSACK FÜR EIN FAHRZEUGINSASSEN-RÜCKHALTESYSTEM**
AIRBAG FOR VEHICLE OCCUPANT RESTRAINT SYSTEM
SAC GONFLABLE POUR UN SYSTÈME DE RETENUE DES OCCUPANTS D'UN VÉHICULE

(30) Priorität: 30.10.2018 DE 202018106208 U
(43) Veröffentlichungstag der Anmeldung: 06.05.2020
(73) Patentinhaber: ZF Automotive Safety Germany GmbH, 63743 Aschaffenburg (DE); Dalphi Metal España, S.A., 36213 Vigo (ES); Safelife Industria de Componentes de Seguranca Automovel S.A., 4990-645 Gemieira (PT)
(72) Erfinder: Lind, Thomas, 97794 Rieneck (DE); Sapountzis, Stefan, 63906 Erlenbach a. Main (DE); Baña Castro, Ramón, 36208 Vigo (ES); Franco, Bartolomeu, 4900-427 Viana do Castelo (PT); Balbás Calvo, Alexandra, 36210 Vigo (ES); Rocha, Diogo, 4900-749 Viano do Castelo (PT)
(74) Vertreter: ZF Patentabteilung - DIPS

(56) Entgegenhaltungen:
- EP-A1- 1 743 811
- DE-A1-102006 027 371
- US-A1- 2002 175 511
- US-A1- 2006 071 462
- US-A1- 2010 001 495
- US-A1- 2014 300 094

## Beschreibung

Die Erfindung betrifft einen Gassack für ein Fahrzeuginsassen-Rückhaltesystem, mit einer Gassackwand, die ein aufblasbares Gassackvolumen definiert sowie einen Frontwandabschnitt und einen Rückwandabschnitt aufweist, einem Fangband, das sich im Inneren des Gassacks durch das aufblasbare Gassackvolumen erstreckt, einer Abströmöffnung, die im Rückwandabschnitt der Gassackwand ausgebildet ist, sowie einem ersten Verschlusslappen und einem zweiten Verschlusslappen zum Verschließen der Abströmöffnung, wobei sich das Fangband von einem fest mit dem Frontwandabschnitt verbundenen ersten Fangbandende in Richtung zur Abströmöffnung bis zu einem entgegengesetzten zweiten Fangbandende erstreckt, wobei sich der erste Verschlusslappen von einem fest mit dem Rückwandabschnitt verbundenen ersten Lappenende bis zu einem fest mit dem zweiten Fangbandende verbundenen zweiten Lappenende erstreckt, und wobei der zweite Verschlusslappen benachbart zur Abströmöffnung am Rückwandabschnitt befestigt ist.

Aus dem Stand der Technik sind bereits Gassäcke bekannt, die abgesehen von dauerhaft offenen Abströmöffnungen auch adaptive Abströmöffnungen aufweisen, welche abhängig von vorbestimmten Randbedingungen, wie z.B. einer Entfaltungsform des Gassacks und/oder einer Sitzposition des Fahrzeuginsassen, wahlweise geöffnet oder zumindest teilweise geschlossen sind.

So offenbart die US 2010/0001495 A1 einen Gassack mit zwei durch eine Zwischenwand getrennten Gassackkammern und einer adaptiven Abströmöffnung, die durch zwei Verschlusslappen freigegeben oder verschlossen werden kann. Die Verschlusslappen sind miteinander sowie über ein Fangband mit der Zwischenwand verbunden, sodass die Abströmöffnung abhängig von einer Lage der Zwischenwand (und damit abhängig von einer Sitzposition des Fahrzeuginsassen) durch die Verschlusslappen zumindest teilweise freigegeben oder weitgehend verschlossen wird.

In der US 2006/0071462 A1 ist ein Gassack mit einer anfangs freigegebenen Abströmöffnung beschrieben, die an einem rüsselartigen Gassackfortsatz ausgebildet ist, wobei der Fortsatz über ein Fangband mit der gegenüberliegenden Gassackwand gekoppelt ist. Befindet sich im Entfaltungsbereich des Gassacks ein Entfaltungshindernis (z.B. ein ungewöhnlich positionierter Fahrzeuginsasse), so bleibt die Abströmöffnung freigegeben, um den Gassack weniger aggressiv zu entfalten. Ist hingegen eine freie Gassackentfaltung möglich, wird der rüsselartige Fortsatz durch das Fangband ins Innere des Gassacks gezogen und durch den Gassackinnendruck so zusammengepresst, dass die Abströmöffnung weitgehend geschlossen ist. Insbesondere ist an dem rüsselartigen Fortsatz ein Verschlussmittel vorgesehen, welches die Abströmöffnung in diesem Fall auch dann geschlossen hält, wenn der Fahrzeuginsasse in den Gassack eintaucht.

Die DE 10 2015 110 365 A1 zeigt einen gattungsgemäßen Gassack mit einer adaptiven Abströmöffnung, die im vollständig aufgeblasenen und entfalteten Zustand des Gassacks geschlossen ist und beim Eintauchen des Insassen in den Gassack geöffnet wird. Die Anpassung der adaptiven Abströmöffnung erfolgt dabei "passiv", insbesondere ausschließlich infolge einer Gassackdeformation durch den Fahrzeuginsassen. Eine elektrische, pyrotechnische oder andere "aktive" Ansteuervorrichtung zum Öffnen und/oder Verschließen der Abströmöffnung ist nicht nötig, wodurch sich der Fertigungsaufwand und die Komplexität des Fahrzeuginsassen-Rückhaltesystems reduziert.

Federt der Fahrzeuginsasse nach dem Eintauchen in den Gassack zurück, wird die adaptive Abströmöffnung gemäß der DE 10 2015 110 365 A1 wieder verschlossen. Es gibt allerdings Situationen, bei denen dieses erneute Verschließen der Abströmöffnung unerwünscht ist und eine weiterhin offene Abströmöffnung für die Insassenrückhaltung vorteilhaft wäre.

Aufgabe der Erfindung ist daher die Schaffung eines konstruktiv möglichst einfach aufgebauten Gassacks mit einer passiv ansteuerbaren, adaptiven Abströmöffnung, die nach ihrer Freigabe irreversibel in der geöffneten Position verbleibt.

Erfindungsgemäß wird diese Aufgabe gelöst durch einen Gassack der eingangs genannten Art, bei dem die beiden Verschlusslappen durch eine beim Aufprall eines Fahrzeuginsassen auf den aufgeblasenen Gassack lösbare Verbindung gekoppelt sind.

Vor einem Aufprall des Fahrzeuginsassen auf den Frontwandabschnitt des aufgeblasenen Gassacks sind die Verschlusslappen durch die lösbare Verbindung aneinander befestigt, sodass die adaptive Abströmöffnung des Gassacks im Wesentlichen geschlossen ist. Beim Aufprall und Eintauchen des Fahrzeuginsassen in den aufgeblasenen Gassack wird die lösbare Verbindung getrennt und die Abströmöffnung freigegeben. Durch diese (irreversible) Trennung der lösbaren Verbindung wird folglich mit geringem konstruktiven Aufwand sichergestellt, dass die Abströmöffnung freigegeben bleibt und sich auch bei einer Rückfederung des Fahrzeuginsassen nicht wieder schließt. Die zu Beginn der Gassackentfaltung geschlossene Abströmöffnung sorgt dafür, dass der Gassack eine lange Standzeit aufweist, also relativ lange einen für die Insassenrückhaltung ausreichenden Innendruck behält. Die irreversible Freigabe der Abströmöffnung ermöglicht dann ein kontrolliertes Eintauchen des Fahrzeuginsassen sowie eine insgesamt vorteilhafte Insassenrückhaltung. Dadurch ist der beschriebene Gassack insbesondere auch zum Einsatz in Fahrzeugen mit einem automatisierten oder autonomen Fahrmodus geeignet.

Vorzugsweise ist die lösbare Verbindung zwischen den beiden Verschlusslappen als Reißnaht ausgeführt. Bei einer Reißnaht lässt sich eine gewünschte Grenzlast, d.h. eine Belastung bei der die Naht aufreißt, mit geringem Aufwand sehr genau einstellen. Darüber hinaus sind Reißnähte schnell und einfach herstellbar.

Die Reißnaht weist bevorzugt zwei lineare Nahtabschnitte auf, welche sich nach Art eines Pfeils ausgehend von einer gemeinsamen Nahtspitze unter einem Winkel, insbesondere einem spitzen Winkel, voneinander weg erstrecken, jeweils bis zu einem freien Nahtabschnittsende. Diese Pfeilform der Reißnaht führt unter Belastung zu einer Spannungskonzentration an der Nahtspitze, sodass sich ein definiertes und gut reproduzierbares Aufreißverhalten ergibt.

Gemäß einer Ausführungsform des Gassacks erstrecken sich die Verschlusslappen vom Inneren des Gassacks durch die Abströmöffnung nach außerhalb des Gassacks, wobei die ersten Lappenenden der beiden Verschlusslappen von außen am Rückwandabschnitt der Gassackwand befestigt, insbesondere (fest) vernäht sind. Die ersten Lappenenden können dabei einander berühren oder sogar einander überlappen, sodass die Verschlusslappen im Bereich der ersten Lappenenden die Abströmöffnung vollständig umschließen.

In dieser Ausführungsform können sich sich bei vollständig aufgeblasenem Gassack die beiden Verschlusslappen im Inneren des Gassacks quer zur Gassackwand und außerhalb des Gassacks parallel zur Gassackwand sowie insbesondere in entgegengesetzte Richtungen erstrecken, sodass im Bereich der Abströmöffnung eine Verschlusslappenumlenkung und damit eine Falte entsteht, wobei die Reißnaht in einem Verschlusslappenabschnitt ausgebildet ist, der sich quer zur Gassackwand erstreckt.

Sofern die Reißnaht pfeilförmig ausgeführt ist, grenzt die Nahtspitze in diesem Fall vorzugsweise an die Falte an, und die linearen Nahtabschnitte verlaufen ausgehend von der Nahtspitze in Richtung zum Frontwandabschnitt. Dadurch wird die Reißnaht bereits unmittelbar nach dem Aufprall des Fahrzeuginsassen auf den aufgeblasenen Gassack getrennt und sorgt somit sehr rasch für eine gewünschte, irreversible Freigabe der Abströmöffnung.

Gemäß einer weiteren Ausführungsform des Gassacks können das Fangband und der erste Verschlusslappen einstückig ausgebildet sein.

Die Erfindung umfasst ferner auch eine Lenkradbaugruppe mit einem Fahrzeuglenkrad, das um eine Lenkachse drehbar ist, und einem Gassackmodul, das einen oben beschriebenen Gassack aufweist. Der Gassack ist in diesem Fall als Fahrergassack im Bereich der Lenkradnabe montiert und kann bei einem Unfall den Fahrer des Fahrzeugs in vorteilhafter Weise schützen.

Weitere Merkmale und Vorteile der Erfindung ergeben sich aus den Unteransprüchen sowie aus der nachfolgenden Beschreibung bevorzugter Ausführungsformen unter Bezugnahme auf die Zeichnungen. In diesen zeigen:
- Figur 1 einen schematischen Schnitt durch einen erfindungsgemäßen Gassack im aufgeblasenen Zustand vor dem Aufprall eines Fahrzeuginsassen;
- Figur 2 einen schematischen Schnitt durch den Gassack gemäß Figur 1 beim Aufprall des Fahrzeuginsassen;
- Figur 3 einen schematischen Schnitt durch den Gassack gemäß Figur 1 nach dem Aufprall des Fahrzeuginsassen;
- Figur 4 einen weiteren schematischen Schnitt durch den Gassack gemäß Figur 1 nach dem Aufprall des Fahrzeuginsassen;
- Figur 5 eine Detailansicht eines Verschlusslappens des Gassacks gemäß Figur 1; und
- Figur 6 einen schematischen Detailschnitt durch einen erfindungsgemäßen Gassack gemäß einer weiteren Ausführungsform.

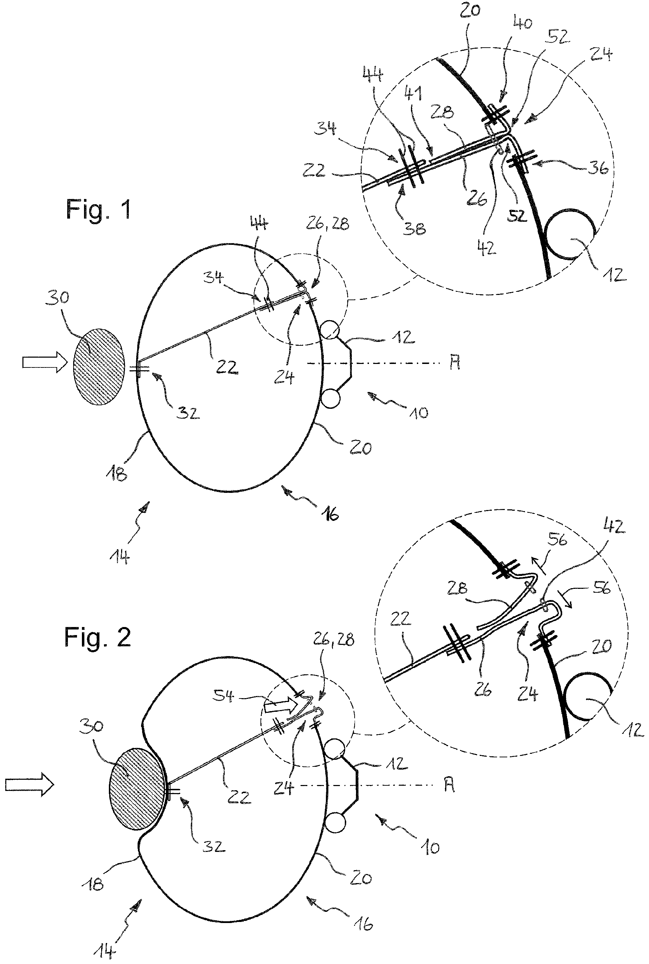

Die Figuren 1 bis 4 zeigen eine Lenkradbaugruppe 10 mit einem Fahrzeuglenkrad 12, das um eine Lenkachse A drehbar ist, sowie einem Gassackmodul, das im Bereich einer Lenkradnabe montiert ist und einen Gassack 14 für ein Fahrzeuginsassen-Rückhaltesystem aufweist.

Der Gassack 14 umfasst eine Gassackwand 16, die ein aufblasbares Gassackvolumen definiert sowie einen Frontwandabschnitt 18 und einen Rückwandabschnitt 20 aufweist, ein Fangband 22, das sich im Inneren des Gassacks 14 durch das aufblasbare Gassackvolumen erstreckt, eine Abströmöffnung 24, die im Rückwandabschnitt 20 der Gassackwand 16 ausgebildet ist, sowie einen ersten Verschlusslappen 26 und einen zweiten Verschlusslappen 28 zum Verschließen der Abströmöffnung 24. Als Frontwandabschnitt 18 wird in diesem Zusammenhang ein Abschnitt der Gassackwand 16 bezeichnet, der im aufgeblasenen Zustand des Gassacks 14 einem Fahrzeuginsassen 30 zugewandt ist, wobei in den Figuren 1 bis 4 lediglich der Kopf des Fahrzeuginsassen 30 schematisch angedeutet ist. Der Rückwandabschnitt 20 ist dementsprechend ein dem Frontwandabschnitt 18 gegenüberliegender, vom Fahrzeuginsassen 30 abgewandter Abschnitt der Gassackwand 16.

Das Fangband 22 erstreckt sich im aufgeblasenen Zustand des Gassacks 14 von einem fest mit dem Frontwandabschnitt 18 verbundenen, insbesondere vernähten ersten Fangbandende 32 in Richtung zur Abströmöffnung 24 hin, bis zu einem entgegengesetzten zweiten Fangbandende 34.

Der erste Verschlusslappen 26 erstreckt sich von einem fest mit dem Rückwandabschnitt 20 verbundenen, insbesondere vernähten ersten Lappenende 36 bis zu einem fest mit dem zweiten Fangbandende 34 verbundenen, insbesondere vernähten zweiten Lappenende 38.

Analog zum ersten Verschlusslappen 26 ist ein erstes Lappenende 40 des zweiten Verschlusslappens 28 benachbart zur Abströmöffnung 24 am Rückwandabschnitt 20 befestigt, insbesondere vernäht.

Darüber hinaus sind die beiden Verschlusslappen 26, 28 durch eine beim Aufprall des Fahrzeuginsassen 30 auf den aufgeblasenen Gassack 14 lösbare Verbindung gekoppelt, wobei diese lösbare Verbindung insbesondere als Reißnaht 42 ausgeführt ist. Die Verschlusslappen 26, 28 sind bevorzugt aus einem Gewebe hergestellt, wobei dieses Gewebe insbesondere mit einem für die Gassackwand 16 verwendeten Gewebe identisch sein kann.

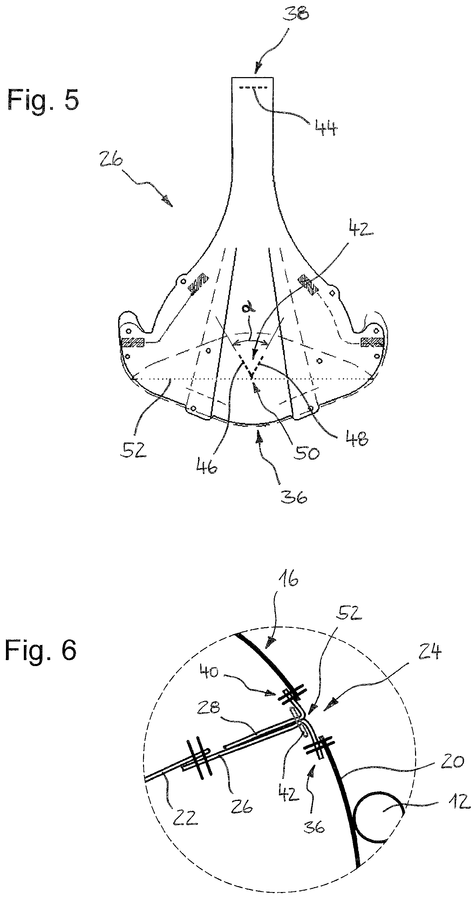

Die Figur 5 zeigt eine Detailansicht des ersten Verschlusslappens 26, wobei am zweiten Lappenende 38 eine Naht 44 angedeutet ist, durch die der erste Verschlusslappen 26 im montierten Zustand fest mit dem Fangband 22 verbunden ist.

Ferner ist die Reißnaht 42 dargestellt, welche vor dem Eintauchen des Fahrzeuginsassen 30 in den aufgeblasenen Gassack 14 die beiden Verschlusslappen 26, 28 aneinander fixiert. Die Reißnaht 42 weist gemäß Figur 5 zwei lineare Nahtabschnitte 46, 48 auf, welche sich nach Art eines Pfeils ausgehend von einer gemeinsamen Nahtspitze 50 unter einem Winkel a, insbesondere unter einem spitzen Winkel α voneinander weg erstrecken, jeweils bis zu einem freien Nahtabschnittsende.

Der zweite Verschlusslappen 28 kann im Wesentlichen identisch mit dem ersten Verschlusslappen 26 ausgebildet sein, wobei der zweite Verschlusslappen 28 an seinem zweiten Lappenende 41 jedoch nicht mit dem Fangband 22 verbunden ist.

Die beiden Verschlusslappen 26, 28 erstrecken sich gemäß den Figuren 1 bis 4 vom Inneren des Gassacks 14 durch die Abströmöffnung 24 hindurch nach außerhalb des Gassacks 14, wobei die ersten Lappenenden 36, 40 der beiden Verschlusslappen 26, 28 auf entgegengesetzten Seiten der Abströmöffnung 24 von außen am Rückwandabschnitt 20 der Gassackwand 16 befestigt, insbesondere vernäht sind. Dabei können die ersten Lappenenden 36, 40, in Umfangsrichtung der Abströmöffnung 24 gesehen, einander berühren oder einander überlappen, sodass die Verschlusslappen 26, 28 im Bereich ihrer ersten Lappenenden 36, 40 die Abströmöffnung 24 vollständig umschließen.

Die Figur 1 zeigt den entfalteten und vollständig aufgeblasenen Gassack 14 bevor der Fahrzeuginsasse 30 auf den Frontwandabschnitt 18 der Gassackwand 16 auftrifft. Dabei erstrecken sich die beiden Verschlusslappen 26, 28 im Inneren des Gassacks 14 quer zur Gassackwand 16 und außerhalb des Gassacks 14 parallel zur Gassackwand 16 in entgegengesetzte Richtungen. Die Verschlusslappen 26, 28 werden folglich im Bereich der Abströmöffnung 24 umgelenkt, sodass eine Falte 52 entsteht, wobei die Reißnaht 42 in einem Verschlusslappenabschnitt ausgebildet ist, der sich quer zur Gassackwand 16 erstreckt. In diesem Verschlusslappenabschnitt liegen die beiden Verschlusslappen 26, 28 aneinander an und werden durch einen Gassackinnendruck lediglich in einer Verschlusslappenlängsrichtung, also quer zur Gassackwand 16 beaufschlagt. Die Reißnaht 42 ist folglich weitgehend unbelastet und fixiert die beiden Verschlusslappen 26, 28 aneinander.

Die Figur 2 zeigt eine Situation beim Eintauchen des Fahrzeuginsassen 30 in den Gassack 14. Der Frontwandabschnitt 18 der Gassackwand 16 wird deformiert, sodass sich das erste Fangbandende 32 in Richtung zur Abströmöffnung 24 bewegt und eine Zugspannung im Fangband 22 nachlässt. Aufgrund der Innendruckbeaufschlagung im Bereich der Abströmöffnung 24 (siehe Pfeil 54) bewegen sich die Verschlusslappen 26, 28 durch die Abströmöffnung 24 nach außen und geben eine Gasströmung durch die Abströmöffnung 24 zumindest teilweise frei. Bei ihrer Bewegung nach außen werden die Verschlusslappen 26, 28 im Bereich der Reißnaht 42 quer zur Verschlusslappenlängsrichtung voneinander weg beaufschlagt (siehe Pfeile 56), sodass die Reißnaht 42 über ihre Grenzlast beansprucht wird und aufreißt.

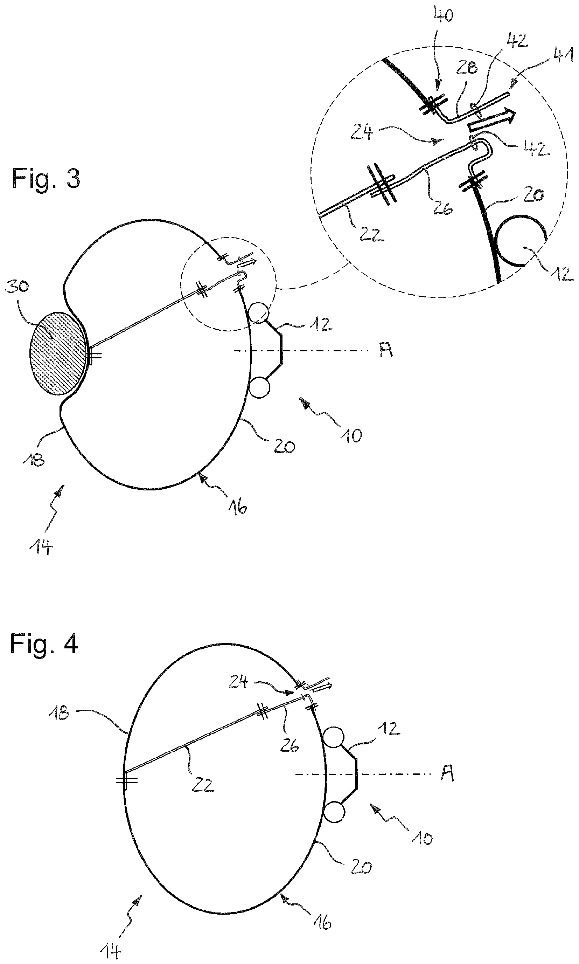

Nach dem Eintauchen des Fahrzeuginsassen 30 und dem Aufreißen der Reißnaht 42 wird der zweite Verschlusslappen 28 durch die Gasströmung aus dem Gassack 14 gedrängt, bis er sich vollständig außerhalb des Gassacks 14 befindet, wie in Figur 3 dargestellt. Der zweite Verschlusslappen 28 wird lediglich durch die Befestigung des ersten Lappenendes 40 an der Gassackwand 16 gehalten und behindert in dieser Position das Abströmen von Gas aus dem Gassack 14 durch die Abströmöffnung 24 nicht.

Gemäß Figur 4 bleibt die Abströmöffnung 24 auch dann offen, wenn der Fahrzeuginsasse 30 nach dem Eintauchen in den Gassack 14 zurückfedert, sich also wieder vom Rückwandabschnitt 20 des Gassacks 14 entfernt.

Folglich weist der Gassack 14 eine Abströmöffnung 24 auf, die beim Eintauchen des Fahrzeuginsassen 30 in vorteilhafter Weise irreversibel geöffnet wird.

Ein solcher Gassack 14 ist insbesondere zum Einsatz in Fahrzeugen mit einem automatisierten oder autonomen Fahrmodus geeignet. Verglichen mit einem manuellen Fahrmodus ist der Fahrzeuginsasse 30 im automatisierten oder autonomen Fahrmodus häufig weiter vom Fahrzeuglenkrad 12 entfernt, beispielsweise weil sich der Fahrzeuginsasse 30 in eine entspannte, zurückgelehnte Sitzposition begeben hat und/oder das Fahrzeuglenkrad 12 vom Fahrzeuginsassen 30 wegbewegt wurde, um diesem mehr Freiraum zu gewähren. Entsprechend trifft der Fahrzeuginsasse 30 bei einer Fahrzeugkollision relativ spät auf den Gassack 14 auf, wodurch ein Gassackinnendruck bereits unerwünscht niedrig sein kann, insbesondere wenn im Gassack 14 dauerhaft offene Gasausströmöffnungen vorgesehen sind. Bei der Gassackausführung gemäß den Figuren 1 bis 4 ist die Abströmöffnung 24 hingegen zu Beginn der Gassackentfaltung durch die Verschlusslappen 26, 28 geschlossen, sodass der Gassack 14 vergleichsweise lange einen für die Insassenrückhaltung ausreichenden Innendruck behält. Erst beim Auftreffen des Fahrzeuginsassen 30 wird die Abströmöffnung 24 freigegeben, wobei die irreversible Freigabe der Abströmöffnung 24 ein kontrolliertes, gedämpftes Eintauchen des Fahrzeuginsassen 30 ermöglicht und insgesamt eine mit dauerhaft offenen Gasausströmöffnungen vergleichbare, vorteilhafte Insassenrückhaltung gewährleistet.

Anhand der Figur 5 wird deutlich, dass die V-förmige oder pfeilförmige Reißnaht 42 im dargestellten Ausführungsbeispiel so angeordnet ist, dass die Nahtspitze 50 an die Falte 52 angrenzt und die linearen Nahtabschnitte 46, 48 ausgehend von der Nahtspitze 50 in Richtung zum Frontwandabschnitt 18 verlaufen. In Figur 5 ist die Falte 52, an welcher der erste Verschlusslappen 26 gemäß Figur 1 von einer Richtung quer zur Gassackwand 16 in eine Richtung parallel zur Gassackwand 16 umgelenkt wird, gepunktet und das an der Falte 52 umgeklappte erste Lappenende 36 des ersten Verschlusslappens 26 gestrichelt angedeutet.

Die Figur 6 zeigt eine weitere Ausführungsform des Gassacks 14, welche sich von der Ausführungsform gemäß den Figuren 1 bis 5 lediglich dadurch unterscheidet, dass die ersten Lappenenden 36, 40 der beiden Verschlusslappen 26, 28 auf entgegengesetzten Seiten der Abströmöffnung 24 nicht von außen, sondern von innen am Rückwandabschnitt 20 der Gassackwand 16 befestigt, insbesondere vernäht sind. Hinsichtlich der allgemeinen Konstruktion und Funktion des Gassacks 14 wird daher auf die obige Beschreibung verwiesen.

Analog zur Ausführungsform gemäß den Figuren 1 bis 5 verlaufen die beiden Verschlusslappen 26, 28 bei vollständig aufgeblasenem Gassack 14 ausgehend von den ersten Lappenenden 36, 40 im Wesentlichen parallel zur Gassackwand 16 aufeinander zu, berühren einander im Bereich der Abströmöffnung 24 und erstrecken sich dann unter Ausbildung der Falte 52 quer zur Gassackwand 16, wobei die Reißnaht 42 an die Falte 52 angrenzt und in einem Verschlusslappenabschnitt ausgebildet ist, der sich quer zur Gassackwand 16 erstreckt.

Auch in dieser Ausführungsform weist die Reißnaht 42 bevorzugt zwei lineare Nahtabschnitte 46, 48 auf, welche sich nach Art eines Pfeils ausgehend von einer gemeinsamen Nahtspitze 50 unter einem Winkel α voneinander weg erstrecken, jeweils bis zu einem freien Nahtabschnittsende (siehe Figur 5). Die Nahtspitze 50 grenzt an die Falte 52 an, und die linearen Nahtabschnitte 46, 48 verlaufen ausgehend von der Nahtspitze 50 in Richtung zum Frontwandabschnitt 18.

Obwohl in den Figuren 1 bis 6 lediglich ein Fahrergassack für die Montage im Fahrzeuglenkrad 12 dargestellt ist, kann es sich bei dem Gassack 14 selbstverständlich auch um einen anderen Gassack, beispielsweise einen Beifahrergassack handeln.

## Patentansprüche

1. Gassack für ein Fahrzeuginsassen-Rückhaltesystem, mit
einer Gassackwand (16), die ein aufblasbares Gassackvolumen definiert sowie einen Frontwandabschnitt (18) und einen Rückwandabschnitt (20) aufweist,
einem Fangband (22), das sich im Inneren des Gassacks (14) durch das aufblasbare Gassackvolumen erstreckt,
einer Abströmöffnung (24), die im Rückwandabschnitt (20) der Gassackwand (16) ausgebildet ist, sowie
einem ersten Verschlusslappen (26) und einem zweiten Verschlusslappen (28) zum Verschließen der Abströmöffnung (24),
wobei sich das Fangband (22) von einem fest mit dem Frontwandabschnitt (18) verbundenen ersten Fangbandende (32) in Richtung zur Abströmöffnung (24) bis zu einem entgegengesetzten zweiten Fangbandende (34) erstreckt,
wobei sich der erste Verschlusslappen (26) von einem fest mit dem Rückwandabschnitt (20) verbundenen ersten Lappenende (36) bis zu einem fest mit dem zweiten Fangbandende (34) verbundenen zweiten Lappenende (38) erstreckt, und
wobei der zweite Verschlusslappen (28) benachbart zur Abströmöffnung (24) am Rückwandabschnitt (20) befestigt ist,
**dadurch gekennzeichnet, dass** die beiden Verschlusslappen (26, 28) durch eine beim Aufprall eines Fahrzeuginsassen (30) auf den aufgeblasenen Gassack (10) lösbare Verbindung gekoppelt sind.

2. Gassack nach Anspruch 1, **dadurch gekennzeichnet, dass** die lösbare Verbindung zwischen den beiden Verschlusslappen (26, 28) als Reißnaht (42) ausgeführt ist.

3. Gassack nach Anspruch 2, **dadurch gekennzeichnet, dass** die Reißnaht (42) zwei lineare Nahtabschnitte (46, 48) aufweist, welche sich nach Art eines Pfeils ausgehend von einer gemeinsamen Nahtspitze (50) unter einem Winkel (α) voneinander weg erstrecken, jeweils bis zu einem freien Nahtabschnittsende.

4. Gassack nach einem der vorhergehenden Ansprüche, **dadurch gekennzeichnet, dass** sich die Verschlusslappen (26, 28) vom Inneren des Gassacks (10) durch die Abströmöffnung (24) nach außerhalb des Gassacks (10) erstrecken, wobei die ersten Lappenenden (36, 40) der beiden Verschlusslappen (26, 28) von außen am Rückwandabschnitt (20) der Gassackwand (16) befestigt sind.

5. Gassack nach Anspruch 3 und 4, **dadurch gekennzeichnet, dass** sich bei vollständig aufgeblasenem Gassack (10) die beiden Verschlusslappen (26, 28) im Inneren des Gassacks (14) quer zur Gassackwand (16) und außerhalb des Gassacks (10) parallel zur Gassackwand (16) erstrecken, sodass im Bereich der Abströmöffnung (24) eine Falte (52) entsteht, wobei die Reißnaht (42) in einem Verschlusslappenabschnitt ausgebildet ist, der sich quer zur Gassackwand (16) erstreckt.

6. Gassack nach Anspruch 5, **dadurch gekennzeichnet, dass** die Nahtspitze (50) an die Falte (52) angrenzt und die linearen Nahtabschnitte (46, 48) ausgehend von der Nahtspitze (50) in Richtung zum Frontwandabschnitt (18) verlaufen.

7. Gassack nach einem der Ansprüche 1 bis 3, **dadurch gekennzeichnet, dass** sich die beiden Verschlusslappen (26, 28) vom Inneren des Gassacks (10) in Richtung zur Abströmöffnung (24) erstrecken, wobei die ersten Lappenenden (36, 40) der beiden Verschlusslappen (26, 28) auf entgegengesetzten Seiten der Abströmöffnung (24) von innen am Rückwandabschnitt (20) der Gassackwand (16) befestigt sind, sodass bei vollständig aufgeblasenem Gassack (10) die beiden Verschlusslappen (26, 28) ausgehend von den ersten Lappenenden (36, 40) im Wesentlichen parallel zur Gassackwand (16) aufeinander zu verlaufen, im Bereich der Abströmöffnung (24) einander berühren und dann unter Ausbildung einer Falte (52) quer zur Gassackwand (16) verlaufen, wobei die Reißnaht (42) an die Falte (52) angrenzt und in einem Verschlusslappenabschnitt ausgebildet ist, der sich quer zur Gassackwand (16) erstreckt.

8. Gassack nach Anspruch 7, **dadurch gekennzeichnet, dass** die Reißnaht (42) zwei lineare Nahtabschnitte (46, 48) aufweist, welche sich nach Art eines Pfeils ausgehend von einer gemeinsamen Nahtspitze (50) unter einem Winkel (α) voneinander weg erstrecken, jeweils bis zu einem freien Nahtabschnittsende, insbesondere wobei die Nahtspitze (50) an die Falte (52) angrenzt und die linearen Nahtabschnitte (46, 48) ausgehend von der Nahtspitze (50) in Richtung zum Frontwandabschnitt (18) verlaufen.

9. Gassack nach einem der vorhergehenden Ansprüche, **dadurch gekennzeichnet, dass** das Fangband (22) und der erste Verschlusslappen (26) einstückig ausgebildet sind.

10. Lenkradbaugruppe mit einem Fahrzeuglenkrad (12), das um eine Lenkachse (A) drehbar ist, und einem Gassackmodul, das einen Gassack (14) nach einem der vorhergehenden Ansprüche aufweist.

## Claims

1. An airbag for a vehicle occupant restraint system comprising
an airbag panel (16) defining an inflatable airbag volume and including a front panel portion (18) and a rear panel portion (20),
a tether (22) extending in the interior of the airbag (14) across the inflatable airbag volume,
a discharge orifice (24) formed in the rear panel portion (20) of the airbag panel (16), as well as
a first closing tab (26) and a second closing tab (28) for closing the discharge orifice (24),
wherein the tether (22) extends from a first tether end (32) tightly connected to the front panel portion (18) in the direction of the discharge orifice (24) to an opposed second tether end (34),
wherein the first closing tab (26) extends from a first tab end (36) tightly connected to the rear panel portion (20) to a second tab end (38) tightly connected to the second tether end (34), and
wherein the second closing tab (28) is fastened adjacent to the discharge orifice (24) on the rear panel portion (20),
**characterized in that** the two closing tabs (26, 28) are coupled by a connection releasable when a vehicle occupant (30) impacts on the inflated airbag (10).

2. The airbag according to claim 1, **characterized in that** the releasable connection between the two closing tabs (26, 28) is in the form of a tear seam (42).

3. The airbag according to claim 2, **characterized in that** the tear seam (42) includes two linear seam portions (46, 48) which extend away from each other at an angle (a) in arrow shape starting from a joint seam tip (50) to a respective free seam portion end.

4. The airbag according to any one of the preceding claims, **characterized in that** the closing tabs (26, 28) extend from the interior of the airbag (10) through the discharge orifice (24) to the outside of the airbag (10), the first tab ends (36, 40) of the two closing tabs (26, 28) being fastened from outside on the rear panel portion (20) of the airbag panel (16).

5. The airbag according to claim 3 and 4, **characterized in that**, when the airbag (10) is completely inflated, the two closing tabs (26, 28) extend in the interior of the airbag (14) transversely to the airbag panel (16) and outside the airbag (10) in parallel to the airbag panel (16) so that in the area of the discharge orifice (24) a fold (52) is formed, wherein the tear seam (42) is configured in a closing tab portion extending transversely to the airbag panel (16).

6. The airbag according to claim 5, **characterized in that** the seam tip (50) abuts on the fold (52) and the linear seam portions (46, 48) extend starting from the seam tip (50) in the direction of the front panel portion (18).

7. The airbag according to any one of the claims 1 to 3, **characterized in that** the two closing tabs (26, 28) extend from the interior of the airbag (10) in the direction of the discharge orifice (24), the first tab ends (36, 40) of the two closing tabs (26, 28) being fastened on opposite sides of the discharge orifice (24) from inside on the rear panel portion (20) of the airbag panel (16) so that, when the airbag (10) is completely inflated, the two closing tabs (26, 28) extend toward each other starting from the first tab ends (36, 40) substantially in parallel to the airbag panel (16), contact each other in the area of the discharge orifice (24) and then extend transversely to the airbag panel (16) while forming a fold (52), wherein the tear seam (42) abuts on the fold (52) and is formed in a closing tab portion which extends transversely to the airbag panel (16).

8. The airbag according to claim 7, **characterized in that** the tear seam (42) includes two linear seam portions (46, 48) which extend in arrow shape away from each other at an angle (a) starting from a joint seam tip (50) to a respective free seam portion end, especially wherein the seam tip (50) abuts on the fold (52) and the linear seam portions (46, 48) extend starting from the seam tip (50) in the direction of the front panel portion (18).

9. The airbag according to any one of the preceding claims, **characterized in that** the tether (22) and the first closing tab (26) are integrally formed.

10. A steering wheel assembly comprising a vehicle steering wheel (12) which is rotatable about a steering axle (A) and comprising an airbag module which includes an airbag (14) according to any one of the preceding claims.

## Revendications

1. Coussin gonflable pour un système de retenue des occupants d'un véhicule, comprenant
une paroi du sac gonflable (16) qui définit un volume de sac gonflable ainsi qu'une partie de paroi avant (18) et une partie de paroi arrière (20)
une sangle d'accrochage (22) qui s'étend à l'intérieur du sac gonflable (14) au travers du volume du sac gonflable
une ouverture d'écoulement (24) qui est formée dans la partie de paroi arrière (20) de la paroi de coussin gonflable (16), ainsi que
un premier volet de fermeture (26) et un second volet de fermeture (28) pour fermer l'ouverture d'écoulement (24),
pour lequel la sangle d'accrochage (22) s'étend d'une première extrémité de la sangle d'accrochage (32) reliée de manière fixe à la partie de paroi avant (18) dans une direction vers l'ouverture d'écoulement (24) jusqu'à une seconde extrémité opposée de la sangle d'accrochage (34)
pour lequel ledit premier volet de fermeture (26) s'étend d'une première extrémité de volet (36) reliée de manière fixe à ladite partie de paroi arrière (20) à une seconde extrémité de volet (38) reliée de manière fixe à ladite seconde extrémité de bande d'accrochage (34), et
pour lequel le second volet de fermeture (28) est fixé à la section de paroi arrière (20) adjacente à l'ouverture d'écoulement (24),
**caractérisé en ce que** les deux volets de fermeture (26, 28) sont couplés par une connexion détachable lors de l'impact d'un occupant du véhicule (30) avec le coussin gonflable (10) à l'état gonflé.

2. Coussin gonflable selon la revendication 1, **caractérisé en ce que** la liaison détachable entre les deux volets de fermeture (26, 28) est conçue comme une couture déchirable (42).

3. Coussin gonflable selon la revendication 2, **caractérisé en ce que** la couture déchirable (42) comprend deux portions de couture linéaires (46, 48) qui s'éloignent l'une de l'autre selon un angle (a) à la manière d'une flèche en partant d'une pointe de couture commune (50), chacune jusqu'à une extrémité de portion de couture libre.

4. Coussin gonflable selon l'une des revendications précédentes, **caractérisé en ce que** les volets de fermeture (26, 28) s'étendent de l'intérieur du coussin gonflable (10) en passant par l'ouverture d'écoulement (24) à l'extérieur du coussin gonflable (10), pour lequel les premières extrémités (36, 40) des deux volets de fermeture (26, 28) sont fixées sur la partie de paroi arrière (20) de la paroi (16) du coussin gonflable depuis l'extérieur.

5. Coussin gonflable selon les revendications 3 et 4, **caractérisé en ce que**, lorsque le coussin gonflable (10) est complètement gonflé, les deux volets de fermeture (26, 28) s'étendent transversalement à la paroi (16) du coussin gonflable à l'intérieur du coussin gonflable (14) et parallèlement à la paroi (16) du coussin gonflable à l'extérieur du coussin gonflable (10), de sorte qu'un pli (52) est formé dans la région de l'ouverture d'écoulement (24), pour lequel la couture déchirable (42) est formée dans une section du volet de fermeture qui s'étend transversalement à la paroi (16) du coussin gonflable.

6. Coussin gonflable selon la revendication 5, **caractérisé en ce que** la pointe de couture (50) est adjacente au pli (52) et les portions de couture linéaires (46, 48) s'étendent de la pointe de couture (50) vers la section de paroi avant (18).

7. Coussin gonflable selon l'une quelconque des revendications 1 à 3, **caractérisé en ce que** les deux volets de fermeture (26, 28) s'étendent de l'intérieur du coussin gonflable (10) vers l'ouverture d'écoulement (24), pour lequel les premières extrémités de volet (36, 40) des deux volets de fermeture (26, 28) sont fixées sur les côtés opposés de l'ouverture d'écoulement (24) depuis l'intérieur à la partie de paroi arrière (20) de la paroi du coussin gonflable (16), de sorte que lorsque le coussin gonflable (10) est complètement gonflé, les deux volets de fermeture (26, 28), s'étendent l'une vers l'autre à partir des premières extrémités de volet (36, 40), essentiellement parallèlement à la paroi du coussin gonflable (16), se touchent dans la zone de l'ouverture d'écoulement (24) et s'étendent ensuite transversalement à la paroi du coussin gonflable (16) en formant un pli (52), pour lequel la couture déchirable (42) est adjacente au pli (52) et est formée dans une section de volet de fermeture qui s'étend transversalement à la paroi du coussin gonflable (16).

8. Sac gonflable selon la revendication 7, **caractérisé en ce que** la couture de déchirable (42) présente deux portions de couture linéaires (46, 48) lesquelles s'écartent l'une de l'autre selon un angle (a) à la manière d'une flèche en partant d'une pointe de couture commune (50), chacune jusqu'à une extrémité de portion de couture libre, en particulier pour lequel la pointe de couture (50) est adjacente au pli (52) et les portions de couture linéaires (46, 48) s'étendent en direction de la partie de paroi avant (18) en partant de la pointe de couture (50).

9. Coussin gonflable selon l'une quelconque des revendications précédentes, **caractérisé en ce que** la sangle d'accrochage (22) et le premier volet de fermeture (26) sont formés d'une seule pièce.

10. Ensemble volant de direction comprenant un volant de véhicule (12) pouvant tourner autour d'un axe de direction (A), et un module airbag comprenant un coussin gonflable (14) selon l'une quelconque des revendications précédentes.
